# EUROPEAN PATENT SPECIFICATION

(11) **EP 3 641 052 B1**
(45) Date of publication and mention of the grant of the patent: **08.12.2021**
(21) Application number: 19201945.3
(22) Date of filing: 08.10.2019
(51) Int. Cl.: H01Q 1/22, H01Q 9/28, H01Q 1/52, H01Q 1/38, E02D 29/14

(54) **ANTENNA DEVICE AND WIRELESS COMMUNICATION SYSTEM**
ANTENNENVORRICHTUNG UND DRAHTLOSKOMMUNIKATIONSSYSTEM
DISPOSITIF D'ANTENNE ET SYSTÈME DE COMMUNICATION SANS FIL

(30) Priority: 18.10.2018 JP 2018196922
(43) Date of publication of application: 22.04.2020
(73) Proprietor: Hitachi, Ltd., Tokyo 100-8280 (JP)
(72) Inventor: Onishi, Masami, Tokyo, 100-8280 (JP); Mizugaki, Kenichi, Tokyo, 100-8280 (JP); Katayama, Rintaro, Tokyo, 100-8280 (JP); Fujiwara, Ryosuke, Tokyo, 100-8280 (JP)
(74) Representative: Manitz Finsterwald Patent- und Rechtsanwaltspartnerschaft mbB

(56) References cited:
- EP-A2- 1 801 293
- JP-A- 2002 050 923
- JP-A- 2010 135 660
- US-A1- 2016 141 757

## Description

### BACKGROUND

The present invention relates to a technology that enables stable transmission and reception in high frequency wireless communication.

Currently, an IoT (Internet of Things) service, in which various things are connected to a network, is under active consideration. A network infrastructure supporting the IoT requires a wireless communication technology different from an existing cellular wireless technology of transmitting and receiving a large amount of information in a short time. That is, communication is considered for the IoT service, which allows for transmitting a small amount of information in shorter transmission time with a longer transmission period and a lower duty ratio compared with the cellular wireless technology and the like. Such communication enables reduction in power consumption and long distance communication with IoT terminals.

For example, Japanese Unexamined Patent Application Publication No. 2018-067165 describes that, in order to perform maintenance management and the like of a manhole (also referred to as manhole or maintenance hole) in which water and sewage pipes are installed, a sensor obtaining various types of data is installed in the manhole and information communication is performed between the sensor provided in the manhole and a receiver on the ground. Japanese Unexamined Patent Application Publication No. 2010-135660 discloses an example of a self-complementary antenna.

A terminal performing one-to-many communication used for the IoT and the like transmits an extremely small amount of information for a short transmission time for elongated transmission periods, thereby communicating at a small duty ratio. This enables low power consumption and long distance communication.

Such a terminal for the IoT and the like is installed in a vast land such as a farm and many households, and collects various types of information from accompanying sensors. Collected information is wirelessly transmitted to a base station to be aggregated. Many such terminals use a regular button cell, a dry cell, or the like to minimize maintenance management cost, and it is required to operate for more than 10 years without replacing the cell. Moreover, in a case where many terminals are placed in the vast land, correspondingly many base stations are required. Thus, the shorter the communication distance between the terminal and the base station is, the more base stations are required to be placed, which is less advantageous in terms of cost.

Furthermore, when a comparison is made with the distance between the terminal and the station and transmission power of the terminal assumed to be constant, it is required to increase the transmission power of the terminal if an antenna gain of the terminal in a direction of the base station is lower, and communication is possible even when the transmission power of the terminal is reduced if the antenna gain of the terminal in the direction of the base station is higher.

In this manner, it was a problem with the IoT communication how to achieve high directivity in the direction of the base station in a place with good visibility or in a direction allowing the best receiving sensitivity in a place with poor visibility, as a property of the antenna for communicating between the terminal and the base station.

One example of the terminal performing one-to-many communication used for the IoT and the like is an IoT terminal installed in a manhole. Japanese Unexamined Patent Application Publication No. 2018-067165 discloses a configuration including a through-hole provided in a metal cover, an antenna component including electrical conductor of which total length is λ/2 of a specific communication wavelength, and an insulator covering at least a portion of the antenna component so that the antenna component may not be electrically connected to the metal cover. This configuration enables communication with an outer space of the manhole, but it is not intended to reduce the length of the antenna to less than λ/2.

For example, because the manhole has a hole like a maintenance hole, accommodating the antenna device therein makes it easy to communicate with the outside. At this time, there is a demand for an antenna device that can be easily mounted in such a small space as the maintenance hole (for example, in a case of 6 cm × 6 cm opening, the opening area is 36 cm²).

Japanese Unexamined Patent Application Publication No. 2010-135660 discloses a self-complementary antenna employing a semiconductor device technology. Although this antenna receives noise emitted from a noise source such as an LSI chip, it does not take into account the above-described problem specific to the IoT communication.

US 2016/0141757 A1, JP2002050923 and EP 1801293 disclose antenna designs with certain symmetry patterns.

It is the object of the invention to provide an antenna device and a wireless communication system enabling stable transmission and reception with a small size in the field of communication technology performing one-to-many communication used for the IoT and the like.

This object is accomplished by the features of claim 1.

### SUMMARY

An antenna device includes the features of claim 1, which include a shield box including a dielectric in a prismatic shape and a conductor coating a portion of the dielectric. Here, assuming one surface of the shield box as a main surface and a surface opposing the main surface as a back surface, the main surface has a structure in which patterns formed by a planar shape of the conductor coating the dielectric and a planar shape of the dielectric not coated with the conductor coincide with each other on the main surface when rotated around a geometric center of gravity of the main surface by 180 degrees. Moreover, a fraction of the dielectric coated with the conductor is larger on the back surface than on the main surface.

Moreover a fraction of the dielectric coated with the conductor is larger on the back surface than on the main surface, and when defining an x-axis and a y-axis parallel to the main surface and orthogonal to each other and also defining a z-axis perpendicular to the main surface, dimensions of the shield box are equal to or less than half a wavelength of a frequency used in directions of the x-, y-, and z-axes, and the main surface has a structure in which the planar shape of the conductor coating the dielectric includes two trapezoids or triangles not axially symmetric about a first centerline equally dividing the main surface in two without overlapping the conductor, lower bases of the two trapezoids or triangles adjoin mutually opposing sides of the main surface, and the planar shape of the dielectric not coated by the conductor is not axially symmetric about a second centerline equally dividing the main surface in two and orthogonal to the first centerline.

A wireless communication system allows for communication between a terminal and a base station using a frequency between 900 MHz and 1 GHz, and using an even higher frequency makes it possible to increase a gain of an antenna device formed as mentioned above.

It is possible to provide a technology enabling stable transmission and reception with a small size in the field of communication technology performing one-to-many communication used for the IoT and the like.

### BRIEF DESCRIPTION OF THE DRAWINGS

The following examples illustrated in Fig. 1, 2, 5-12 do not form part of the invention and are present for illustration purposes only. Embodiments forming part of the invention are illustrated in Fig. 3, 4.

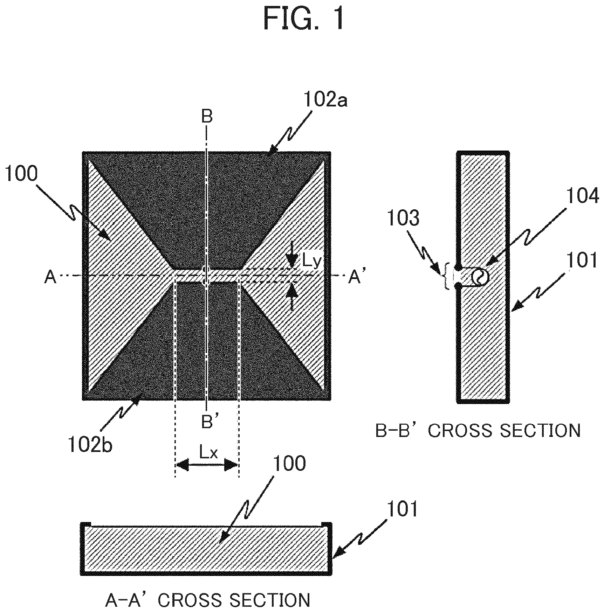

Fig. 1 presents three orthographic views showing an example configuration of an antenna device according to a first example of the present invention;

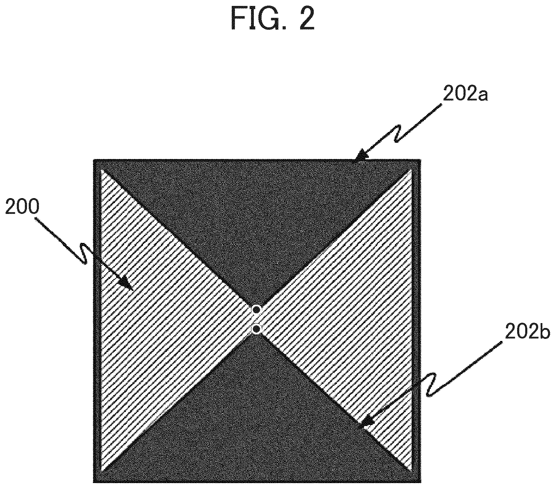

Fig. 2 is a top view showing an example configuration of an antenna device according to a second example of the present invention;

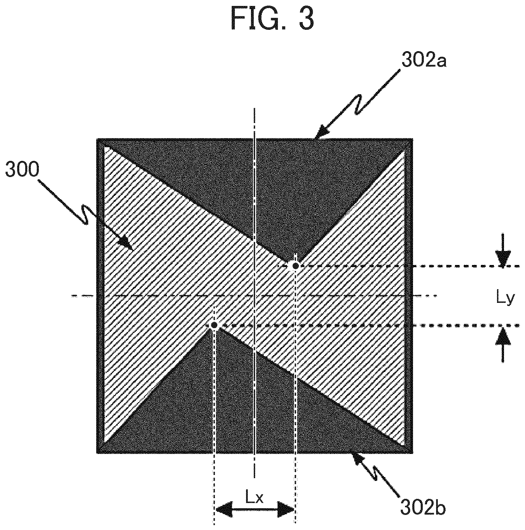

Fig. 3 is a top view showing an example configuration of an antenna device according to a third example of the present invention;

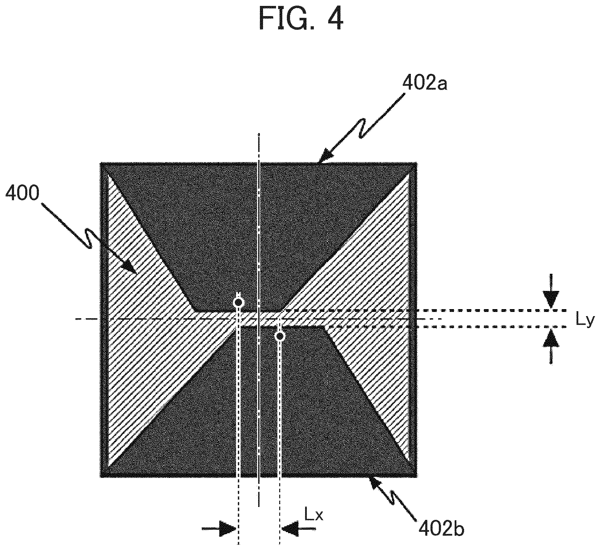

Fig. 4 is a top view showing an example configuration of an antenna device according to a fourth example of the present invention;

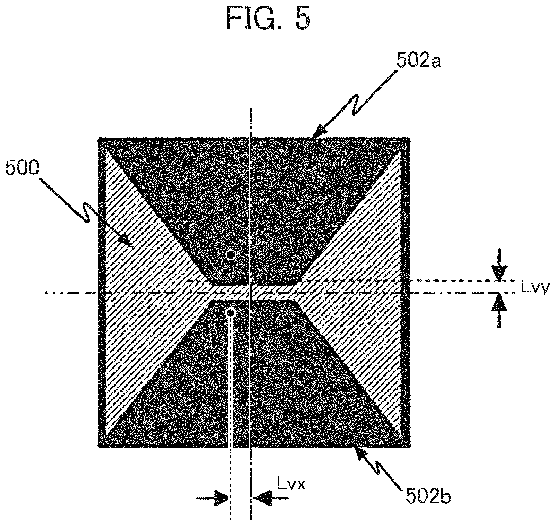

Fig. 5 is a top view showing an example configuration of an antenna device according to a fifth example of the present invention;

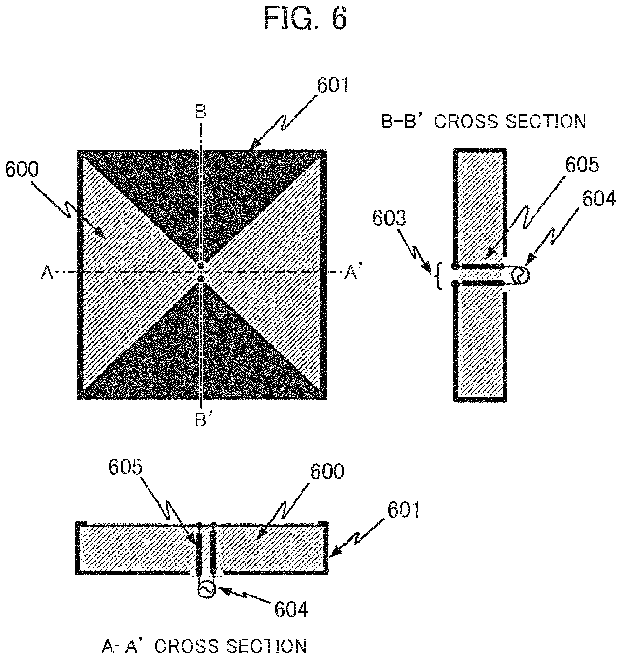

Fig. 6 presents three orthographic views showing an example configuration of an antenna device according to a sixth example of the present invention;

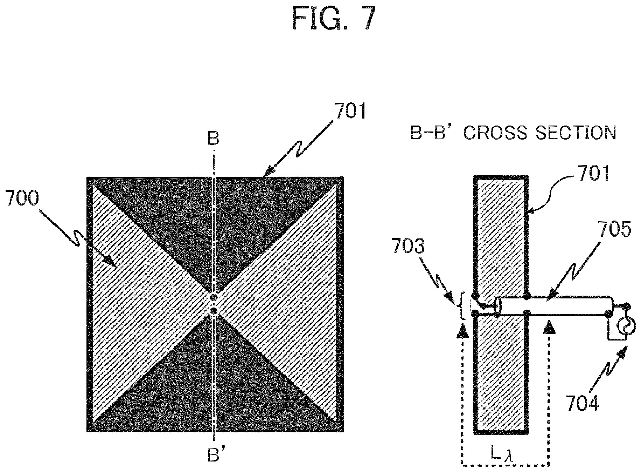

Fig. 7 presents two orthographic views showing an example configuration of an antenna device according to a seventh example of the present invention;

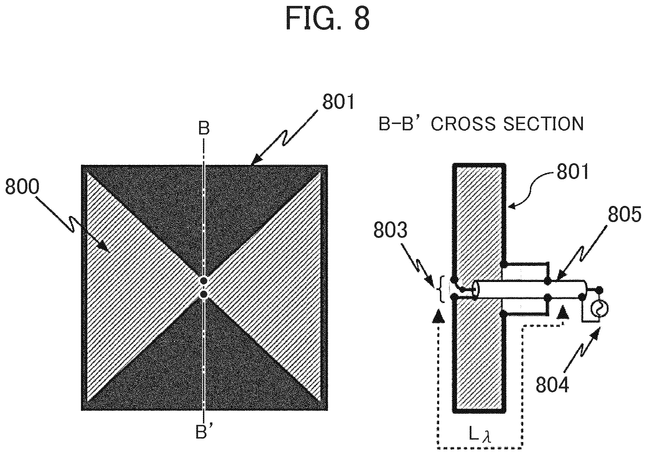

Fig. 8 presents two orthographic views showing an example configuration of an antenna device according to an eighth example of the present invention;

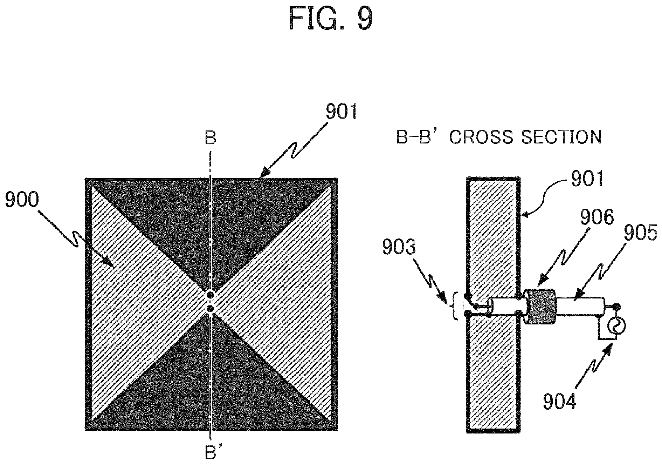

Fig. 9 presents two orthographic views showing an example configuration of an antenna device according to a ninth example of the present invention;

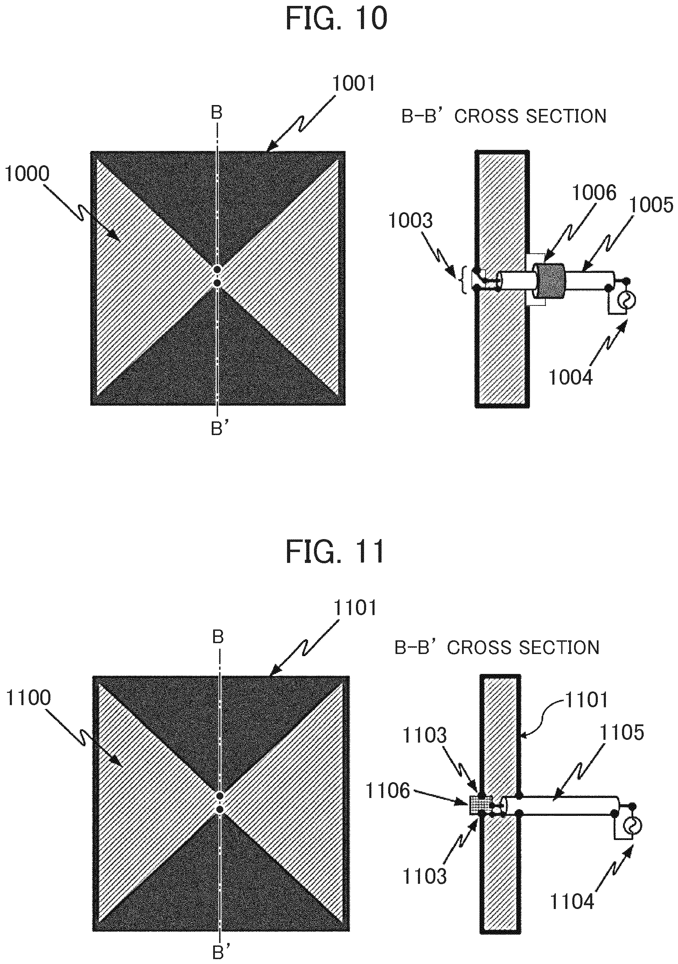

Fig. 10 presents two orthographic views showing an example configuration of an antenna device according to a tenth example of the present invention;
Fig. 11 presents two orthographic views showing an example configuration of an antenna device according to an eleventh example of the present invention;

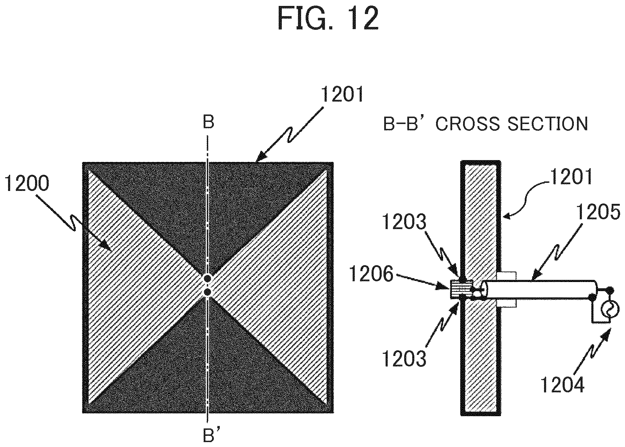

Fig. 12 presents two orthographic views showing an example configuration of an antenna device according to a twelfth example of the present invention;

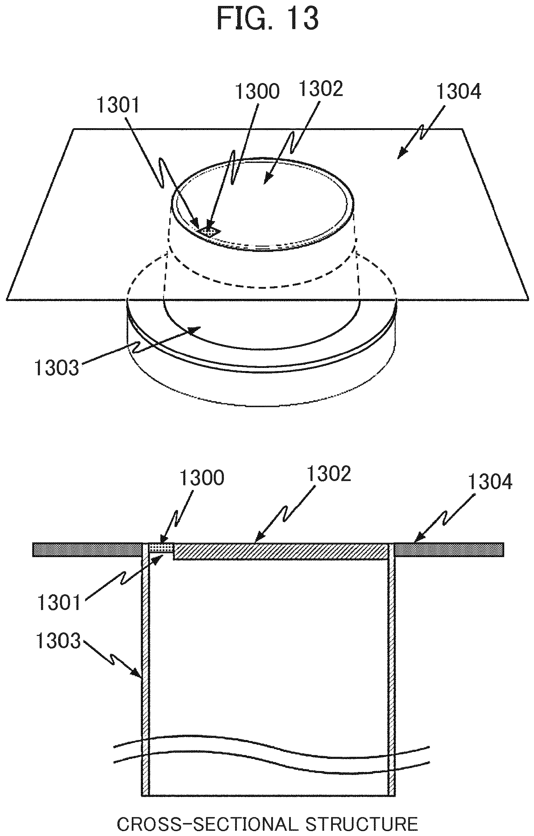

Fig. 13 presents a perspective view and a cross-sectional view showing an application example using an antenna device according to a thirteenth example of the present invention; and

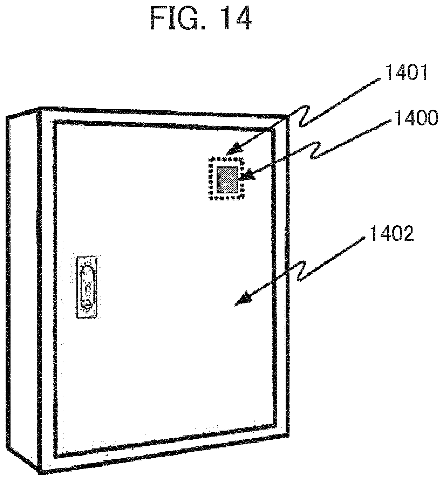

Fig. 14 is a perspective view showing an application example using an antenna device according to a fourteenth example of the present invention.

### DETAILED DESCRIPTION

For easy understanding of the invention, a position, size, shape, range, or the like of each component illustrated in the drawings described below may not represent an actual position, size, shape, range, or the like. Therefore, the present invention is not necessarily limited to the position, size, shape, range, or the like disclosed in the drawings and the like.

An explanation is given taking an example of an IoT terminal installed in a manhole as an example of performing one-to-many communication used for the IoT and the like. The manhole is assumed to have a metallic cover generally installed on the road. In order to increase the size of the antenna itself to obtain a high antenna gain, it is realistic to install the antenna in a space inside the manhole due to constraint on an installation site.

For example, assume that the antenna is installed inside the manhole in a state of being integrated with or connected by a high-frequency cable to the IoT terminal. If the antenna is placed inside the manhole, radio wave can be radiated to the outer space only through the maintenance hole provided to the cover of the manhole . This largely attenuates the radio wave radiated from the antenna inside the manhole.

Furthermore, because directivity of the radio wave radiated from the maintenance hole inclines to a vertical direction to the upper side of the manhole, communication to the base station installed in a horizontal direction with respect to a plane of the manhole is difficult. This is because the manhole is made of soil or concrete containing metal and water, which can be regarded as a kind of circular waveguide. Moreover, even if there is no manhole cover, it is characterized that the radiation power increases while the directivity of the radiated radio wave inclines to the vertical direction to the upper side of the manhole.

As a solution to such a problem, it can be conceived to obtain an excellent gain and an excellent radiation property by installing a small antenna in the maintenance hole of the manhole to be close to the space outside the manhole. Because the small antenna is to be installed in the maintenance hole, its size is on the order of 10 to 50 mm on each side. It is to be noted that the antenna size is not limited thereto when it is installed to an object other than a manhole.

In a case where the antenna is placed inside the manhole, the power radiated to the outside of the manhole is decreased from the total power emitted from the antenna by approximately -60 to -30 dB. Assuming that the transmission power is 10 dBm, the attenuation is -30 dB, and the antenna gain is 20 dBi, a relatively large antenna would radiate 10-30+10 = -10 dB.

Compared with reduction of the radiation power emitted from the antenna installed inside the manhole, the gain of the small antenna installed in the maintenance hole of the manhole is about -10 to 10 dBi. However, if the transmission power is 10 dBm, the attenuation is 0 dB, and the antenna gain is -10 dBi owing to elimination of the loss inside the manhole, which means 10-0-10 = 0 dB. This results in about 10 dB priority over the antenna installed inside the manhole.

The above consideration indicates effectiveness of the concept of installing a small and low-gain antenna outside the manhole (specifically, to the cover portion) while having a spatial constraint. Accordingly, it is expected to further improve the system performance by improving performance of the small antenna capable of being installed in the maintenance hole of the manhole, for example.

As a typical frequency for providing an IoT service, 920 MHz band is used. The antenna dimension at this frequency is generally equal to or more than half a wavelength which is 163 mm (free space), or may be about 80 mm when using a substrate material having a relative dielectric constant Er = 4. To install this antenna in the maintenance hole of about 10 to 50 mm on each side in the manhole, the size of the small antenna is made smaller than half a wavelength, which reduces the gain. Moreover, by reducing the antenna size, its impedance largely deviates from a line impedance Z = 50 Ω to incline to the vicinity of either short 0 Ω or open ∞ Ω. A matching circuit is additionally provided to match them with Z = 50 Ω. However, there is a problem that the matching band lowers as an impedance ratio between the antenna impedance and the line impedance increases.

An example configuration in the light of the above is described below. A small antenna sized to be installed in the maintenance hole or the like of the manhole is constituted by a slot antenna (an antenna using a slot made in a conductor surface as a radiation element), and a surface opposite from the surface having the slot is coated with the conductor. This allows electromagnetic waves to be converged on the surface having the slot. Moreover, the surface having the slot is arranged to face outside the manhole. The configuration as described above prevents reduction in intensity of the radiation power to the outside of the manhole.

Moreover, it is configured so that patterns formed by a planar shape of the conductor coating the dielectric and a planar shape of the dielectric not coated with the conductor coincide with each other when rotated by 180 degrees. This configuration suppresses the directivity, thereby making it easier to have a self-complementary structure and a self-similar structure. Specifically, it is possible to have a self-complementary antenna structure in which the slot shape and the metal shape on the upper antenna surface are nearly identical to each other. By having the self-complementary antenna structure, it is easy to be set to a constant impedance. It is also possible to have the self-similar antenna structure that does not change the shape thereof even when the scale is changed. On the other hand, it is possible to adjust properties on the basis of the properties of the self-complementary structure and the self-similar structure by shifting the shape from the perfect self-complementary structure and self-similar structure.

The slot antenna having either one or both of the self-complementary antenna structure and the self-similar antenna structure allows for broadening the matching band of the antenna. Moreover, making the impedance change characteristics gentler with respect to the frequency of the small antenna itself makes it possible to simplify the configuration of the external matching circuit, whereby reduction of a loss in the circuit can increase the radiation power, making it possible to communicate with a remote base station.

Moreover, by installing the small antenna in the maintenance hole of the manhole to be close to the space outside the manhole, design of directivity of the antenna makes it possible to control the direction and intensity of radiation.

Hereinbelow, with reference to drawings, the basic configuration of an antenna device according to examples for carrying out the invention (hereinafter, referred to as examples) is described using Fig. 1, and then characteristic configurations of the examples are described using respective drawings. It is noted that like reference symbols are used to designate common components and like components throughout the drawings, and description thereof is omitted.

In this embodiment, application to a high frequency wireless communication device, especially communication from a base station of a high frequency wireless communication device used for the IoT and the like to many high frequency wireless communication device terminals, is assumed. Described are examples of extending a communication distance and enabling stable transmission and reception in such communication using an antenna that transmits or receives electromagnetic waves from a transmitter-receiver circuit performing one-to-many communication. The electromagnetic wave radiated from the antenna device of the embodiment is basically non-directivity type or close to non-directivity type.

### First Embodiment

Fig. 1 presents a top view and cross-sectional views in two directions showing an example configuration of an antenna device according to a first example of the present invention. The antenna device includes a rectangular parallelepiped shield box structure. The shield box structure has a metal conductor 101 as an outline, and the inside of the metal conductor 101 is filled with a dielectric 100. The dielectric 100 is a resin, for example, and the metal conductor 101 is copper, for example, which are common materials and can be selected from among those having a desired dielectric constant and conductivity as needed. By selecting a dielectric having a dielectric constant (relative dielectric constant) higher than that of air, an effect of reducing the wavelength due to the dielectric constant allows for reducing the size of the antenna. Alternatively, the antenna gain is reduced very little despite the small-size of the antenna.

In this embodiment, the rectangular parallelepiped shield box structure has two surfaces with relatively large areas and four surfaces with relatively small areas, and the top view in Fig. 1 shows one of the surfaces with relatively large areas.

One surface of the shield box shown in the top view in Fig. 1 (hereinbelow, referred to as "main surface" for convenience) has two trapezoidal metal surfaces 102a, 102b that are axially symmetric about A-A' in the middle. Respective lower bases of two trapezoids on the trapezoidal metal surfaces 102a, 102b adjoin mutually opposing sides of the main surface. A surface of the shield box opposing the main surface (hereinbelow, referred to as "back surface" for convenience) is coated with the metal conductor 101. This antenna device is configured so that the electromagnetic wave is radiated mainly from the main surface. Instead of coating the whole back surface with the metal conductor 101, a fraction of the dielectric 100 coated with the metal conductor 101 may be larger on the main surface than on the back surface. For example, when passing a feeder line through from the back surface as described later, the portion for the feeder line to pass through is not coated with the metal conductor 101. It is to be noted that surfaces of the shield box other than the main surface and the back surface are sometimes referred to as "side surfaces" for convenience.

Furthermore, the portion of the main surface of the shield box other than the two trapezoidal metal surfaces 102a, 102b where the dielectric 100 is exposed (a hatched portion on the top view in Fig.1) is axially symmetric about a line B-B' orthogonal to the axis of symmetry A-A' of the two trapezoidal metal surfaces 102a, 102b. It is to be noted that, in the following description, the portion of the main surface coated with the metal conductor 101 may be referred to as "conductor coated portion" for convenience and the portion exposing the dielectric 100 may be referred to as "dielectric exposed portion" for convenience.

The antenna device is basically configured so that the back surface dominantly coated with the metal conductor 101 on the bottom of the dielectric 100 is electrically connected to the opposing trapezoidal metal surfaces 102a, 102b on the top thereof. Such a configuration converges the electromagnetic waves on the main surface and thus suppresses radiation to other portions. However, the metal conductor 101 on the side surface does not necessarily need to coat the entire dielectric 100. As long as a gap between the main surface and the back surface (height of the side surface) is sufficiently smaller than the 1/4 wavelength of the frequency used, it is no problem using an electrically conducting through-hole or the like instead of coating the side surface with the metal conductor 101. It may otherwise be configured so that only a portion of the side surface is coated with the metal conductor 101.

In the following embodiment, for convenience of describing the shield box structure, it is defined that a transverse direction on the plane of paper is an x-direction, a longitudinal direction is a y-direction, and a direction perpendicular to the x-direction and the y-direction is a z-direction. In this embodiment, dimensions of the antenna device, i.e. the lengths thereof in the x-, y-, and z-directions, are assumed to be equal to or less than a half, preferably a quarter, of the wavelength used. The device shown in Fig. 1 has a rectangular parallelepiped shape with its top surface being square, each side of the square being 20 mm, and the thickness being 1.6 mm. On the premise that the dimension is smaller than the wavelength used, a prismatic shape (columnar body with a polygonal base) or a cylindrical shape may be used instead of the rectangular parallelepiped. Taking into account the productivity, however, the rectangular parallelepiped is advantageous.

Although description will be given in a second embodiment (Fig. 2) that follows, the antenna with the self-complementary structure and the self-similar structure has a characteristic property. To construct a desired system for the IoT, however, it may be necessary to partially alter the configuration of the self-complementary structure and the self-similar structure to adjust the property. In the example shown in Fig. 1, the shape of the conductor coated portion is trapezoidal and the configuration is shifted from the self-complementary structure and the self-similar structure. By making the length of the upper base equal to or less than 1/3 of the width of the main surface in the x-direction, the property of the self-complementary structure and the self-similar structure can be partially maintained.

Moreover, a feeding point 103 is located on a horizontal centerline B-B' in the drawing. The feeding point 103 is supplied with power from a power supply circuit 104. Changing an upper base length Lx of the trapezoidal metal surfaces 102a, 102b and an inter-upper base distance Ly of the trapezoidal metal surfaces 102a, 102b makes it possible to change the matching condition, the radiation gain, the directivity, and the like of the antenna device. The inter-upper base distance Ly shall be, for example, equal to or less than 1/3 of the width of the main surface in the y-direction.

In the example shown in Fig. 1, the patterns of the conductor coated portion and the dielectric exposed portion are axially symmetric about the centerlines A-A' and B-B'. If there is no need for the gain, the directivity, and the like to be symmetric, however, instead of using the axially symmetric pattern, distances from the centerline A-A' or B-B' to two feeding points 103 may be different. Alternatively, the upper base length Lx or the inter-upper base distance Ly may not be equal with respect to the centerline A-A' or B-B'.

### Second Embodiment

Fig. 2 is a top view showing an example configuration of a main surface of an antenna device according to a second example. The antenna device has the same configuration as that shown in Fig. 1 according to the first embodiment except the main surface. It is different in that the upper base lengths of the trapezoidal metal surfaces 102a, 102b in Fig. 1 are extremely reduced, forming almost triangular shapes. In the configuration in Fig. 2, the dielectric exposed portion exposing the dielectric 200 on the main surface of the shield box has almost similar shape and area as those of the triangular metal surfaces 202a, 202b that are conductor coated portions.

In this manner, by forming the dielectric exposed portion on the main surface of the shield box to have almost similar shape and area as those of the conductor coated portions, the self-complementary structure can be achieved in which the dielectric exposed portion and the conductor coated portions have nearly identical shapes to each other. In general, the antenna with the self-complementary structure has constant impedance characteristics regardless of the frequency used and its shape.

Moreover, the configuration in Fig. 2 has the self-similar structure in which its shape does not change even if the overall dimensional scale is changed. In general, the antenna with the self-similar structure has an ultrawide band because it has constant characteristics regardless of the frequency.

As described above, the small antenna to be installed in the maintenance hole or the like of the manhole is made to include a patch and slot antenna structure to have the self-complementary antenna structure in which the slot shape and the metal shape on the upper antenna surface are similar to each other. Moreover, the self-similar antenna structure is achieved in which its shape does not change even if the scale is changed.

Because the patch and slot antenna structure has either one or both of the self-complementary antenna structure and the self-similar antenna structure, the matching band of the antenna can be broadened. Moreover, making the impedance change characteristics gentler with respect to the frequency of the small antenna itself makes it possible to simplify the configuration of the external matching circuit, whereby reduction of a loss in the circuit can increase the radiation power, making it possible to communicate with a remote base station. Furthermore, by installing the small antenna in the maintenance hole or the like of the manhole to be close to the space outside the manhole, design of directivity of the antenna makes it possible to control the direction and intensity of radiation. Third Embodiment forming part of the invention

Fig. 3 shows an example configuration of a main surface of an antenna device according to a third example of the present invention. The antenna device has the same configuration as that shown in Fig. 2 according to the second embodiment except the main surface and the feeding point, with the two feeding points on the triangular metal surfaces 202a, 202b in Fig. 2 being shifted in opposite directions along the x-direction. As a result, as can be seen from triangular metal surfaces 302a, 302b, and a dielectric 300 in Fig. 3, the dielectric exposed portions are not axially symmetric about the centerline in the x-direction but rotationally symmetric about the geometric center of gravity of the main surface by 180 degrees. In this manner, as in the first embodiment, changing a feeding point distance Lx of the triangular metal surfaces 302a, 302b and a feeding point distance Ly of the triangular metal surfaces 302a, 302b makes it possible to change the matching condition, the radiation gain, the directivity, and the like.

By making the distance Lx equal to or less than 1/3 of the width of the main surface in the x-direction, for example, and the distance Ly equal to or less than 1/3 of the width of the main surface in the y-direction, for example, the property of the self-complementary structure and the self-similar structure can be maintained.

It is to be noted that, if there is no need for the gain, the directivity, and the like to be symmetric, there is no need for equalizing the distances from the centerline to the two feeding points. Moreover, there is no need for equalizing Lx and Ly with respect to the centerline. Fourth Embodiment forming part of the invention

Fig. 4 shows an example configuration of an antenna device according to a fourth example of the present invention. The antenna device has the same configuration as that shown in Fig. 1 according to the first embodiment except the main surface and the feeding point. It is different in that the two feeding points 103 on the trapezoidal metal surfaces 102a, 102b in Fig. 1 are shifted in opposite directions along the x-direction. As a result, as with triangular metal surfaces 402a, 402b, and a dielectric 400 in Fig. 4, the dielectric exposed portions are not axially symmetric about the centerline in the x-direction but rotationally symmetric about the geometric center of gravity of the main surface by 180 degrees. In this manner, as in the first embodiment, changing a feeding point distance Lx of the triangular metal surfaces 402a, 402b and a feeding point distance Ly of the triangular metal surfaces 402a, 402b makes it possible to change the matching condition, the radiation gain, the directivity, and the like.

By making the distance Lx equal to or less than 1/3 of the width of the main surface in the x-direction, for example, and the distance Ly equal to or less than 1/3 of the width of the main surface in the y-direction, for example, the property of the self-complementary structure and the self-similar structure can be maintained.

It is to be noted that, if there is no need for the gain, the directivity, and the like to be symmetric, there is no need for equalizing the distances Lx, Ly to the feeding point with respect to the centerline.

### Fifth Embodiment

Fig. 5 shows an example configuration of an antenna device according to a fifth example of the present invention. The antenna device has the same configuration as that shown in Fig. 1 according to the first embodiment except the main surface and the feeding point, but it has trapezoidal metal surfaces 502a, 502b with the feeding points on the trapezoidal metal surfaces 102a, 102b in Fig. 1 being offset by an amount Lvx with respect to the centerline in the y direction. Moreover, the feeding points are offset by an amount Lvx from the centerline in the x direction. Adjusting the offset amount makes it possible to change the matching condition, the radiation gain, the directivity, and the like. By making the offset amount Lvx equal to or less than 1/3 of the width of the main surface in the x-direction, for example, and the offset Lvy equal to or less than 1/3 of the width of the main surface in the y-direction, for example, the property of the self-complementary structure and the self-similar structure can be maintained. A dielectric exposed portion of a dielectric 500 is similar to the dielectric exposed portion of the dielectric 100 in Fig. 1.

### Sixth Embodiment

Fig. 6 presents a top view and cross-sectional views in two directions showing an example configuration of an antenna device according to a sixth example of the present invention. The antenna device has the same configuration as that shown in Fig. 2 according to the second embodiment, but it is configured so that a feeder line 605 for feeding electromagnetic waves from a feeding point 603 to the inside of the shield box in a rectangular parallelepiped shape is passed through from the back surface of the shield box.

At this time, the feeder line 605 is constituted by a balanced line, and connected to a power supply circuit 604 without being connected to a portion of a metal conductor 601. Therefore, the feeding point of the conductor coated portion on the main surface is supplied with power from an electrode insulated from the metal conductor 601 covering the back surface, for example, via a through-hole. Moreover, by shifting the position of the feeding point, it is possible to change impedance.

This enables feeding from a lower part (back surface side). As commonly known, the balanced line includes a reciprocating conductor symmetric with respect to a ground, such as a feeder wire. The dielectric exposed portion of the dielectric 600 is similar to the dielectric exposed portion of the dielectric 200 in Fig. 2.

### Seventh Embodiment

Fig. 7 presents a top view and a cross-sectional view showing an example configuration of an antenna device according to a seventh example of the present invention. The antenna device has the same configuration as that shown in Fig. 2 according to the second embodiment, but it is configured so that a feeder line 705 for feeding electromagnetic waves from a feeding point 703 to the inside of the shield box in the rectangular parallelepiped shape is passed through from the back surface of the shield box.

At this time, the feeder line 705 is constituted by an unbalanced line, connected to a portion of a metal conductor 701, and further connected to a power supply circuit 704. This enables feeding from the lower part (back surface side). For example, an outer conductor of a coaxial cable is connected to the conductor coated portion on the back surface and also to one of the conductor coated portions on the main surface, and an inner conductor of the coaxial cable is not connected to the back surface but connected to one of the conductor coated portions on the main surface.

In a case where the feeder line 705 of the unbalanced line is connected to the feeding point 703, connecting a balanced circuit to the unbalanced line of the feeder line 705 causes radiation of unnecessary electromagnetic field from the feeder line 705. To prevent this, by making a distance Lλ from the feeding point 703 to a connecting point of the feeder line 705 and the metal conductor 701 equal to or less than 1/4 wavelength, it is possible to reduce unnecessary electromagnetic wave radiation.

As commonly known, the unbalanced line includes a reciprocating conductor asymmetric with respect to the ground, such as a coaxial cable. The dielectric exposed portion of the dielectric 700 is similar to the dielectric exposed portion of the dielectric 200 in Fig. 2.

### Eighth Embodiment

Fig. 8 presents a top view and a cross-sectional view showing an example configuration of an antenna device according to an eighth example of the present invention. The antenna device has the same configuration as that shown in Fig. 2 according to the second embodiment, but it is configured so that a feeder line 805 for feeding electromagnetic waves from a feeding point 803 to the inside of the shield box in the rectangular parallelepiped shape is passed through from the back surface of the above-described shield box.

At this time, the feeder line 805 is constituted by an unbalanced line, connected to a portion of a metal conductor 801, and further connected to a power supply circuit 804. This enables feeding from the lower part (back surface side). In a case where the feeder line 805 of the unbalanced line is connected to the feeding point 803, connecting a balanced circuit to the unbalanced line of the feeder line 805 causes radiation of unnecessary electromagnetic field from the feeder line 805. To prevent this, by making a distance Lλ from the feeding point 803 to a connecting point of the feeder line 805 and the metal conductor 801 equal to or less than 1/4 wavelength, it is possible to reduce unnecessary electromagnetic wave radiation. The dielectric exposed portion of the dielectric 800 is similar to the dielectric exposed portion of the dielectric 200 in Fig. 2.

As shown in Fig. 8, connecting the feeder line 805 and the metal conductor801 outside the shield box allows the distance Lλ to be longer than that in the configuration shown in Fig. 7, which can respond to a longer wavelength.

### Ninth Embodiment

Fig. 9 presents a top view and a cross-sectional view showing an example configuration of an antenna device according to a ninth example of the present invention. The antenna device has the same configuration as that shown in Fig. 2 according to the second embodiment, but it is configured so that a feeder line 905 for feeding electromagnetic waves from a feeding point 903 to the inside of the shield box in the rectangular parallelepiped shape is passed through from the back surface of the shield box. At this time, the feeder line 905 is constituted by an unbalanced line, connected to a portion of a metal conductor 901, and further connected to a power supply circuit 904. This enables feeding from the lower part (back surface side).

In a case where the feeder line 905 of the unbalanced line is connected to the feeding point 903, connecting a balanced circuit to the unbalanced line of the feeder line 905 causes radiation of unnecessary electromagnetic field from the feeder line 905.

To prevent the radiation of the unnecessary electromagnetic field, as described with reference to Figs. 7 and 8, the radiation can be suppressed by making the distance from the feeding point 903 to a connecting point of the unbalanced line and the metal conductor 901 equal to 1/4 wavelength, but it may sometimes be difficult to achieve the distance of 1/4 wavelength due to the constraint on the size of the shield box. In such a case, the unnecessary electromagnetic wave radiation can be reduced by connecting the feeder line 905 to the metal conductor 901 and installing an element that increases impedance extremely with the frequency used, such as a ferrite ring 906, in the vicinity of the portion where the unbalanced line of the feeder line 905 and the metal conductor 901 are connected. The dielectric exposed portion of the dielectric 900 is similar to the dielectric exposed portion of the dielectric 200 in Fig. 2.

### Tenth Embodiment

Fig. 10 presents a top view and a cross-sectional view showing an example configuration of an antenna device according to a tenth example of the present invention. The antenna device has the same configuration as that shown in Fig. 2 according to the second embodiment, but it is configured so that a feeder line 1005 for feeding electromagnetic waves from a feeding point 1003 to the inside of the shield box in the rectangular parallelepiped shape is passed through from a surface opposing the above-described one surface of the shield box. At this time, the feeder line 1005 is constituted by an unbalanced line, and connected to a power supply circuit 1004. This enables feeding from the lower part (back surface side).

In a case where the feeder line 1005 of the unbalanced line is connected to the feeding point 1003, connecting a balanced circuit to the unbalanced line of the feeder line 1005 causes radiation of unnecessary electromagnetic field from the feeder line 1005.

To prevent the radiation of the unnecessary electromagnetic field, the radiation can be suppressed by making the distance from the feeding point 1003 to a connecting point of the unbalanced line and the metal conductor equal to 1/4 wavelength, but it may sometimes be difficult to connect the feeder line 1005 to the metal conductor 1001 or to make the connection ensuring the distance of 1/4 wavelength. In such a case, the unnecessary electromagnetic wave radiation can be reduced by installing an element that increases impedance extremely with the frequency used, such as a ferrite ring 1006, in the vicinity of the portion where the unbalanced line of the feeder line 1005 comes out of the back surface, without connecting the feeder line 1005 to the metal conductor 1001. The dielectric exposed portion of the dielectric 1000 is similar to the dielectric exposed portion of the dielectric 200 in Fig. 2.

### Eleventh Embodiment

Fig. 11 presents a top view and a cross-sectional view showing an example configuration of an antenna device according to an eleventh example of the present invention. The antenna device has the same configuration as that shown in Fig. 2 according to the second embodiment, but it is configured so that a feeder line 1105 connected from the feeding point 1103 to a balance-unbalance conversion circuit 1106 and used for feeding electromagnetic waves to the inside of the shield box in the rectangular parallelepiped shape is connected and passed through from the back surface of the shield box to a metal conductor 1101 on the back surface.

At this time, the feeder line 1105 is constituted by an unbalanced line, connected to a portion of the metal conductor 1101, and further connected to a power supply circuit 1104. This enables feeding from the lower part (back surface side).

Here, because the balance-unbalance conversion circuit 1106 is connected to the feeding point 1103, the unnecessary electromagnetic wave radiation can be reduced. As the balance-unbalance conversion circuit 1106, it is possible to use a balun or the like that converts an electric signal between a balanced state and an unbalanced state, such as between a coaxial cable and a double feeder cable. The dielectric exposed portion of the dielectric 1100 is similar to the dielectric exposed portion of the dielectric 200 in Fig. 2.

### Twelfth Embodiment

Fig. 12 presents a top view and a cross-sectional view showing an example configuration of an antenna device according to a twelfth example of the present invention. The antenna device has the same configuration as that shown in Fig. 2 according to the second embodiment, but it is configured so that a feeder line 1205 from the feeding point 1203 to balance-unbalance conversion circuit 1206 and used for feeding electromagnetic waves to the inside of the shield box in the rectangular parallelepiped shape is passed through from the back surface of the shield box to a metal conductor 1201 without being connected thereto.

At this time, the feeder line 1205 is constituted by an unbalanced line, connected to a portion of the conductor surface, and further connected to a power supply circuit 1204. This enables feeding from the lower part. Here, because the balance-unbalance conversion circuit 1206 is connected to the feeding point 1203, the unnecessary electromagnetic wave radiation can be reduced. The dielectric exposed portion of the dielectric 1200 is similar to the dielectric exposed portion of the dielectric 200 in Fig. 2. Thirteenth Embodiment

Fig. 13 presents a perspective view and a cross-sectional view showing an application example using an antenna device according to a thirteenth example of the present invention. In this example, any one of the antenna devices described above in the first to twelfth embodiments may be used. This embodiment assumes an example of a wireless communication system that transmits data obtained from various sensors installed inside the manhole to the base station via the antenna device.

The wireless communication system performs communication at a frequency of 300 to 3000 MHz, which is a UHF (Ultra High Frequency) band. One example uses a frequency of 900 MHz to 1 GHz, specifically a 920 MHz band. The antenna dimension at this frequency is generally equal to or more than half a wavelength which is 163 mm (free space) . In this system, however, because the antenna device is to be installed in the maintenance hole of the manhole, the dimensions of the antenna, i.e. the length thereof in x-, y-, and z-directions, are assumed to be equal to or less than a half, preferably a quarter, of the wavelength used. In this example, the antenna dimensions are 20 mm × 20 mm × 1. 6 mm. It is to be noted that, in practice, the degree of freedom can be improved by configuring the antenna device so that the dimensions of the space in any directions are equal to or less than a half, preferably a quarter, of the wavelength used.

As shown in the perspective view, an antenna device 1300 described above in the first to twelfth embodiments is installed in a maintenance hole 1301 formed in a metal cover 1302 of a manhole 1303 buried in a ground 1304. The antenna device 1300 may be installed in a notch or a recess separately formed in the metal cover 1302, instead of the maintenance hole 1301.

In an installation method, for example, the antenna device is fixed inside the maintenance hole 1301 of the manhole with the back surface of the antenna device facing metal included in the metal cover 1302. At this time, the main surface of the antenna device faces an open space leading to the outside of the manhole. Alternatively, the main surface of the antenna device may be oriented to the outside of the manhole 1303. This allows the radio wave mainly radiated from the main surface of the antenna device to be radiated to the outside of the manhole.

Although the main surface of the antenna device faces upward in the embodiment shown in Fig. 13, it may not necessarily face upward but may face laterally. For example, the antenna device may be attached on the side surface of the maintenance hole 1301 of the metal cover 1302. It is important that the electromagnetic wave radiated from the main surface of the antenna device 1300 should reach the outer space of the manhole 1303.

It is to be noted that the antenna device 1300 may be integrated with the metal cover 1302. In such a case, a portion of the metal conductor in the antenna device 1300 may be omitted and a portion of the metal cover 1302 may be used instead.

When the antenna device is at a potential equivalent to that of the ground 1304 (grounding) , the radiation on the upper part (main surface side) becomes dominant, and the electromagnetic wave radiation to the inside of the manhole 1303 is extremely decreased. This prevents influence by physical changes inside the manhole, making it possible to increase the electromagnetic wave radiation power to the outer space in a stable state.

### Fourteenth Embodiment

Fig. 14 is a perspective view showing an application example using an antenna device according to a fourteenth example of the present invention. In this example, any one of the antenna devices described above in the first to twelfth embodiments may be used. This embodiment assumes an example of transmitting data obtained from a power distribution panel itself or a sensor installed in the power distribution panel via the antenna device.

An antenna device 1400 described in any one of the first to twelfth embodiments is installed in a maintenance window 1401 of a power distribution panel 1402. The antenna device 1400 may be installed in a notch or a recess separately formed in a cover of the power distribution panel, instead of the maintenance window 1401. In an installation method, for example, it is assumed to screw the metal conductor on the back surface of the antenna device to a metallic casing of the power distribution panel 1402 in contact therebetween. At this time, the main surface of the antenna device faces an open space. Especially the main surface of the antenna device preferably faces the outside of the power distribution panel 1402 or a space in communication with the outside.

It is to be noted that the antenna device 1400 may be integrated with the power distribution panel 1402. In such a case, a portion of the metal conductor in the antenna device 1400 may be omitted and a portion of the metallic casing of the power distribution panel 1402 may be used instead.

When the antenna device is at a potential equivalent to that of the metal included in the power distribution panel 1402 (grounding), the radiation on the upper part (main surface side) becomes dominant, and the electromagnetic wave radiation to the inside of the power distribution panel 1402 is extremely decreased. This prevents influence by physical changes inside the power distribution panel, making it possible to increase the electromagnetic wave radiation power to the outer space in a stable state.

According to the embodiments described above in detail, because a high frequency wireless communication device, specifically an antenna that receives or transmits an electromagnetic wave to and from a transmitter-receiver circuit performing one-to-many communication used for the IoT and the like, can be characterized to reduce a loss and broaden the frequency band, its communication range is increased and it is feasible to reduce the cost owing to reduction in the power consumption and the number of base stations as well as to extend cell longevity. Moreover, owing to an almost non-directive property, the device is capable of effective transmission to a space outside a manhole or an electric equipment.

Embodiments shall not be understood as being necessarily meant exclusive against each other. Descriptions of a method or procedure or a method step or a procedural step shall be understood also as description of means and/or possibly program instructions of executable code on a data carrier adapted for implementing the method or procedure or method step or procedural step, and vice versa.

## Claims

1. An antenna device (1300, 1400) comprising a shield box including a dielectric (300, 400) in a prismatic shape and a conductor (302a, 302b, 402a, 402b) coating a portion of the dielectric,
wherein, assuming one surface of the shield box as a main surface and a surface opposing the main surface as a back surface, the main surface has a structure in which patterns formed by a planar shape of the conductor (302a, 302b, 402a, 402b) coating the dielectric and a planar shape of the dielectric not coated with the conductor coincide with each other when rotated around a geometric center of gravity of the main surface by 180 degrees, wherein a fraction of the dielectric coated with the conductor (302a, 302b, 402a, 402b) is larger on the back surface than on the main surface,
when defining an x-axis and a y-axis parallel to the main surface and orthogonal to each other and also defining a z-axis perpendicular to the main surface, dimensions of the shield box are equal to or less than half a wavelength of a frequency used in directions of the x-, y-, and z-axes, and
the main surface has a structure in which the planar shape of the conductor (302a, 302b, 402a, 402b) coating the dielectric includes two trapezoids or triangles not axially symmetric about a first centerline equally dividing the main surface in two without overlapping the conductor (302a, 302b, 402a, 402b), lower bases of the two trapezoids or triangles adjoin mutually opposing sides of the main surface, and the planar shape of the dielectric (300, 400) not coated by the conductor (302a, 302b, 402a, 402b) is not axially symmetric about a second centerline equally dividing the main surface in two and orthogonal to the first centerline.

2. The antenna device (1300, 1400) according to claim 1,
wherein the main surface is a surface with a largest area of the prismatic shape.

3. The antenna device (1300, 1400) according to claim 1,
wherein, when defining an x-axis and a y-axis parallel to the main surface and orthogonal to each other and also defining a z-axis perpendicular to the main surface, dimensions of the shield box are equal to or less than 50 mm in directions of the x-, y-, and z-axes.

4. The antenna device (1300, 1400) according to claim 1,
wherein the dielectric (300, 400) has a rectangular parallelepiped shape.

5. The antenna device (1300, 1400) according to claim 1,
wherein a feeder line for feeding electromagnetic waves to the inside of the shield box is passed through from the back surface.

6. A wireless communication system that allows for communication between a terminal and a base station using a frequency between 900 MHz and 1 GHz, the system comprising an antenna device (1300, 1400) according to claim 1 used by the terminal for transmission.

7. The wireless communication system according to claim 6,
wherein, when defining an x-axis and a y-axis parallel to the main surface and orthogonal to each other and also defining a z-axis perpendicular to the main surface, dimensions of the shield box are equal to or less than a quarter of a wavelength of a frequency used in directions of the x-, y-, and z-axes.

8. The wireless communication system according to claim 6,
wherein the antenna device (1300, 1400) is fed from the back surface.

9. The wireless communication system according to claim 6, wherein the antenna device (1300, 1400) is configured to be installed in a hole in a portion of a metal cover of a manhole or a metallic casing of an electric equipment with the main surface facing an outside of the manhole or the electric equipment or a space in communication therewith.

10. The wireless communication system according to claim 9,
wherein an opening area of the hole is equal to or less than 36 cm².

## Patentansprüche

1. Antenneneinrichtung (1300, 1400), umfassend ein Abschirmgehäuse mit einem Dielektrikum (300, 400) in Prismaform und einem Leiter (302a, 302b, 402a, 402b), der einen Abschnitt des Dielektrikums umkleidet,
wobei, wenn eine Fläche des Abschirmgehäuses als Hauptfläche und eine Fläche, die der Hauptfläche gegenüberliegt, als hintere Fläche angenommen werden, die Hauptfläche einen Aufbau aufweist, bei dem sich Muster, die durch eine planare Form des Leiters (302a, 302b, 402a, 402b), der das Dielektrikum umkleidet, und eine planare Form des Dielektrikums, das nicht mit dem Leiter umkleidet ist, gebildet sind, bei einer Drehung um einen geometrischen Schwerpunkt der Hauptfläche um 180 Grad miteinander decken, wobei
ein Anteil des mit dem Leiter (302a, 302b, 402a, 402b) umkleideten Dielektrikums an der hinteren Fläche größer ist als an der Hauptfläche,
wenn eine x-Achse und eine y-Achse parallel zu der Hauptfläche und orthogonal zueinander definiert werden und auch eine z-Achse senkrecht zu der Hauptfläche definiert wird, Abmessungen des Abschirmgehäuses gleich der oder kleiner als die Hälfte einer Wellenlänge einer Frequenz, die in Richtungen der x-, y- und z-Achse verwendet wird, sind, und
die Hauptfläche einen Aufbau aufweist, bei dem die planare Form des Leiters (302a, 302b, 402a, 402b), der das Dielektrikum umkleidet, zwei Trapeze oder Dreiecke umfasst, die um eine erste Mittellinie, die die Hauptfläche gleichmäßig in zwei Teile teilt, ohne den Leiter (302a, 302b, 402a, 402b) zu überlappen, nicht achsensymmetrisch sind, wobei die unteren Basen der beiden Trapeze oder Dreiecke an einander gegenüberliegenden Seiten der Hauptfläche angrenzen, und die planare Form des Dielektrikums (300, 400), das nicht durch den Leiter (302a, 302b, 402a, 402b) umkleidet ist, nicht um eine zweite Mittellinie, die die Hauptfläche gleichmäßig in zwei Teile teilt und orthogonal zu der ersten Mittellinie ist, achsensymmetrisch ist.

2. Antenneneinrichtung (1300, 1400) nach Anspruch 1, wobei die Hauptfläche eine Fläche mit einer größten Region der Prismaform ist.

3. Antenneneinrichtung (1300, 1400) nach Anspruch 1,
wobei, wenn eine x-Achse und eine y-Achse parallel zu der Hauptfläche und orthogonal zueinander definiert werden, und auch eine z-Achse senkrecht zu der Hauptfläche definiert wird, Abmessungen des Abschirmgehäuses gleich oder kleiner als 50 mm in Richtungen der x-, y- und z-Achse sind.

4. Antenneneinrichtung (1300, 1400) nach Anspruch 1,
wobei das Dielektrikum (300, 400) eine Form eines rechtwinkligen Parallelepipeds aufweist.

5. Antenneneinrichtung (1300, 1400) nach Anspruch 1,
wobei eine Zuführungsleitung zum Zuführen von elektromagnetischen Wellen in das Innere des Abschirmgehäuses von der hinteren Fläche hindurchgeführt ist.

6. Drahtloskommunikationssystem, das eine Kommunikation zwischen einem Endgerät und einer Basisstation unter Verwendung einer Frequenz zwischen 900 MHz und 1 GHz ermöglicht, wobei das System eine Antenneneinrichtung (1300, 1400) nach Anspruch 1 umfasst, die durch das Endgerät für eine Übertragung verwendet wird.

7. Drahtloskommunikationssystem nach Anspruch 6,
wobei, wenn eine x-Achse und eine y-Achse parallel zu der Hauptfläche und orthogonal zueinander definiert werden und auch eine z-Achse senkrecht zu der Hauptfläche definiert wird, Abmessungen des Abschirmgehäuses gleich einem oder kleiner als ein Viertel einer Wellenlänge einer Frequenz, die in Richtungen der x-, y- und z-Achse verwendet wird, sind.

8. Drahtloskommunikationssystem nach Anspruch 6,
wobei die Antenneneinrichtung (1300, 1400) von der hinteren Fläche versorgt wird.

9. Drahtloskommunikationssystem nach Anspruch 6,
wobei die Antenneneinrichtung (1300, 1400) ausgestaltet ist, um in einem Loch in einem Abschnitt einer Metallabdeckung eines Einstiegslochs oder eines Metallgehäuses eines elektrischen Geräts eingebaut zu sein, wobei die Hauptfläche einer Außenseite des Einstiegslochs oder des elektrischen Geräts oder einem Raum, der damit in Verbindung steht, zugewandt ist.

10. Drahtloskommunikationssystem nach Anspruch 9,
wobei eine Öffnungsregion des Lochs gleich oder kleiner als 36 cm² ist.

## Revendications

1. Dispositif d'antenne (1300, 1400) comprenant une boîte de blindage incluant un diélectrique (300, 400) de forme prismatique et un conducteur (302a, 302b, 402a, 402b) revêtant une partie du diélectrique,
dans lequel, en supposant qu'une surface de la boîte de blindage soit une surface principale et qu'une surface opposée à la surface principale soit une surface arrière, la surface principale a une structure dans laquelle des motifs formés par une forme plane du conducteur (302a, 302b, 402a, 402b) revêtant le diélectrique et une forme plane du diélectrique non revêtu par le conducteur coïncident l'un avec l'autre lorsqu'ils sont tournés de 180 degrés autour d'un centre de gravité géométrique de la surface principale,
dans lequel une fraction du diélectrique revêtu par le conducteur (302a, 302b, 402a, 402b) est plus grande sur la surface arrière que sur la surface principale,
en définissant un axe x et un axe y parallèles à la surface principale et orthogonaux l'un à l'autre et en définissant également un axe z perpendiculaire à la surface principale, les dimensions de la boîte de blindage sont égales ou inférieures à la moitié d'une longueur d'onde d'une fréquence utilisée dans les directions des axes x, y et z, et
la surface principale a une structure dans laquelle la forme plane du conducteur (302a, 302b, 402a, 402b) revêtant le diélectrique inclut deux trapèzes ou triangles non axialement symétriques autour d'une première ligne centrale divisant de manière égale la surface principale en deux sans chevaucher le conducteur (302a, 302b, 402a, 402b), les bases inférieures des deux trapèzes ou triangles sont adjacentes à des côtés mutuellement opposés de la surface principale, et la forme plane du diélectrique (300, 400) non revêtu par le conducteur (302a, 302b, 402a, 402b) n'est pas axialement symétrique autour d'une seconde ligne centrale divisant de manière égale la surface principale en deux et orthogonale à la première ligne centrale.

2. Dispositif d'antenne (1300, 1400) selon la revendication 1,
dans lequel la surface principale est une surface ayant la plus grande aire de la forme prismatique.

3. Dispositif d'antenne (1300, 1400) selon la revendication 1,
dans lequel, en définissant un axe x et un axe y parallèles à la surface principale et orthogonaux l'un à l'autre et en définissant également un axe z perpendiculaire à la surface principale, les dimensions de la boîte de blindage sont égales ou inférieures à 50 mm dans les directions des axes x, y et z.

4. Dispositif d'antenne (1300, 1400) selon la revendication 1,
dans lequel le diélectrique (300, 400) a une forme de parallélépipède rectangle.

5. Dispositif d'antenne (1300, 1400) selon la revendication 1,
dans lequel une ligne d'alimentation pour alimenter en ondes électromagnétiques l'intérieur de la boîte de blindage est passée à travers la surface arrière.

6. Système de communication sans fil permettant une communication entre un terminal et une station de base utilisant une fréquence comprise entre 900 MHz et 1 GHz, le système comprenant un dispositif d'antenne (1300, 1400) selon la revendication 1 utilisé par le terminal pour la transmission.

7. Système de communication sans fil selon la revendication 6,
dans lequel, en définissant un axe x et un axe y parallèles à la surface principale et orthogonaux l'un à l'autre et en définissant également un axe z perpendiculaire à la surface principale, les dimensions de la boîte de blindage sont égales ou inférieures à un quart d'une longueur d'onde d'une fréquence utilisée dans les directions des axes x, y et z.

8. Système de communication sans fil selon la revendication 6,
dans lequel le dispositif d'antenne (1300, 1400) est alimenté depuis la surface arrière.

9. Système de communication sans fil selon la revendication 6,
dans lequel le dispositif d'antenne (1300, 1400) est configuré pour être installé dans un trou d'une partie d'un couvercle métallique d'un trou d'homme ou d'un boîtier métallique d'un équipement électrique, avec la surface principale faisant face à un extérieur du trou d'homme ou de l'équipement électrique ou à un espace en communication avec celui-ci.

10. Système de communication sans fil selon la revendication 9,
dans lequel une aire d'ouverture du trou est égale ou inférieure à 36 cm².
